# FASCICULE DE BREVET EUROPEEN

(11) **EP 0 511 093 B1**
(45) Date de publication et mention de la délivrance du brevet: **25.09.1996**
(21) Numéro de dépôt: 92401137.2
(22) Date de dépôt: 22.04.1992
(51) Int. Cl.: B65G 51/02

(54) **Procédé et dispositif de conditionnement et de distribution de petites pièces cylindriques**
Verfahren und Vorrichtung zum Konditionieren und Verteilen von zylindrischen Kleinteilen
Method and device for conditioning and distributing small cylindrical parts

(30) Priorité: 25.04.1991 FR 9105134
(43) Date de publication de la demande: 28.10.1992
(73) Titulaire: Etablissements SAINT - CHAMOND - GRANAT S.A., F-95310 Saint Ouen l'Aumone (FR)
(72) Inventeur: Barbel, Guy, F-60110 Amblainville (FR); Hamard, René, F-7786 Quincy Voisin (FR); Fauchet, Christian, F-95810 Grisy les Platres (FR)
(74) Mandataire: Simonnot, Bernard

(56) Documents cités:
- EP-A- 0 373 685
- DE-A- 3 148 990
- FR-A- 2 348 127
- FR-A- 2 398 668

## Description

La présente invention concerne un procédé de conditionnement et de distribution de petites pièces cylindriques, telles que vis ou rivets. L'invention couvre en outre un dispositif pour la mise en oeuvre du procédé ci-dessus, directement applicable sur machine d'assemblage.

A l'heure actuelle, l'automatisation des opérations d'assemblage dans l'industrie nécessite, parmi d'autres fonctions complexes, des ensembles particuliers de transport des pièces telles que vis ou rivets, depuis une position de stockage avancé, en général incorporée à la machine, jusqu'à un dispositif de préhension unitaire destiné à présenter la vis ou le rivet sur l'assemblage à réaliser.

Une solution largement répandue consiste à stocker les pièces en vrac dans une trémie ou dans un alimentateur vibrant, à les faire se présenter une à une, correctement orientées par un dispositif de sélection, puis à les propulser sous l'action de l'air comprimé dans un tube reliant le point de stockage au point d'emploi sur la machine d'assemblage. Ce procédé, qui est par exemple couramment employé sur les machines de perçage-rivetage automatique utilisées dans l'industrie aéronautique, présente l'inconvénient majeur d'être coûteux en termes de temps de réglage pour changement de type de rivet puisqu'il nécessite de vider ou changer la trémie, changer le sélecteur et le tube d'amenage. Certaines machines sont équipées de plusieurs trémies contenant chacune un type de rivet différent, mais le nombre de trémies reste très limité, en général quatre ou cinq au maximum, par rapport à la très grande variété des rivets utilisés par exemple sur une structure d'avion, et la multiplication des trémies entraîne un surcoût important d'équipement machine pour un faible gain de commodité.

Une autre solution connue consiste à ranger les pièces en colonne à l'intérieur d'un tube en spirale et à faire progresser cette colonne à l'aide d'air comprimé admis à une extrémité. Ce type de solution présente cependant plusieurs inconvénients et notamment celui de devoir charger puis décharger le tube par la mêne extrémité, faisant ainsi ressortir les rivets à l'envers par rapport à l'orientation nécessaire à leur utilisation, et en outre de nécessiter plusieurs manipulations de raccordement et d'obturation/désobturation tout en devant être raccordé à un sélecteur de pièces coup par coup de configuration adaptée à chacun des nombreux types de rivets, éventuellement suivi d'un dispositif de retournement de rivet sélectionné pour le présenter dans le sens convenable sur la machine de rivetage.

Par ailleurs, le document DE-A-31 48 990 décrit un magasin d'alimentation de petites pièces, notamment des écrous, réalisé sous la forme d'un simple tube élastique enroulé en une spirale maintenue par des barrettes et une chaînette. Le tube n'est pas prévu pour répondre à des conditions particulières de débit d'air en fonction des pièces à distribuer, celles-ci pouvant être de forme quelconque et se déplacer perpendiculairement à leur axe de symétrie, comme dans le cas des écrous.

Le document EP-A-373 685 décrit un procédé et un dispositif de distribution de rivets, dans un tube enroulé en spirale, à surface intérieure présentant plusieurs rainures longitudinales, rectilignes ou hélicoïdales, pour l'écoulement de l'air de propulsion, l'agencement impliquant un dispositif supplémentaire de retournement de chaque pièce entre la sortie du tube et la machine utilisatrice.

La présente invention vise donc à remédier à tous ces inconvénients en fournissant un procédé de conditionnement et de distribution permettant une alimentation et une sélection aisée des pièces et en intégrant toutes les fonctions de stockage/ déstockage /sélection coup par coup/obturation automatique, selon un dispositif constituant un magasin portatif assimilable à une cassette directement connectable ou déconnectable de la machine d'assemblage, par exemple de rivetage, en une seule et unique manipulation.

Le procédé selon l'invention de conditionnement et de distribution de petites pièces cylindriques, telles que vis ou rivets, dont le plus grand diamètre de la tête est identique et dont la longueur du fût peut être différente, dans lequel on dispose lesdites pièces dans le même sens, fût devant, en une colonne dans un tube d'alimentation cylindrique muni en amont d'une ouverture d'alimentation en pièces et d'une entrée d'air comprimé et muni en aval d'une sortie de distribution desdites pièces associée à un organe de distribution coup par coup à douille, fourreau, ressort et billes, est du type dans lequel on forme une restriction de débit d'air entre la paroi du tube et chaque tête, afin de provoquer une légère différence de pression entre la face amont et la face aval de la tête de chaque pièce, permettant d'engendrer une poussée axiale sur chacune d'entre elles et d'introduire la pièce de la sortie aval dans l'organe de distribution, et est caractérisé par le fait que l'on forme la restriction de débit d'air en fixant le diamètre de la paroi intérieure du tube entre 1,10 et 1,40 fois le plus grand diamètre de la tête des pièces cylindriques.

Pour la mise en oeuvre du procédé ci-dessus, le dispositif selon l'invention de conditionnement et de distribution de petites pièces cylindriques, telles que vis ou rivets, dont le plus grand diamètre de la tête est identique et dont la longueur du fût peut être différente, lesdites pièces étant disposées dans le même sens, fût devant, en une colonne, comprend un tube cylindrique constituant la colonne de pièces cylindriques, muni d'une ouverture d'alimentation, d'une entrée d'air comprimé et d'une sortie des pièces, le tube étant disposé en spirale à l'intérieur d'un conteneur et sa sortie étant reliée à un organe de distribution coup par coup des pièces, du type à douille, fourreau, ressort et billes, et est caractérisé par le fait que le conteneur est rigide, le distributeur étant fixé sur le conteneur et présentant le même diamètre et le même axe de fonctionnement que ce dernier, l'ensemble monobloc du conteneur et du distributeur coopérant avec un socle de forme complémentaire solidaire de la machine d'assemblage et comportant un conduit de passage de pièces coaxial avec le conduit du distributeur d'alimentation d'un dispositif de préhension unitaire de la machine, un unique conduit d'alimentation en air comprimé étant entièrement logé dans le conteneur, alimenté directement à partir du socle à travers un ajutage de connexion et débouchant à l'extrémité amont du tube, qui est obturée par un bouchon amovible, de telle sorte que l'ensemble conteneur-distributeur associé à chaque type de pièces est directement connectable ou déconnectable du socle de la machine en une seule et unique manipulation.

Un organe de distribution coup par coup destiné à des pièces cylindriques présentant une tête est avantageusement constitué par une douille munie d'une double rangée de billes insérées dans des orifices coniques dont le plus petit diamètre est orienté vers l'intérieur, sur laquelle un fourreau est monté à coulissement et comprend une rainure circulaire dans sa paroi intérieure de sorte que les billes puissent présenter un débattement radial et faire saillie vers l'intérieur de la douille ou s'en rétracter vers le fond de ladite rainure, le fourreau étant commandé en coulissement par effet mécanique ou pneumatique.

Dans cet agencement, le diamètre intérieur de la douille est tel que les pièces cylindriques y passent librement en position rétractée des billes et soient arrêtées par leur tête en position de saillie de ces billes.

D'autres caractéristiques et avantages de l'invention ressortiront mieux de la description qui va suivre de formes possibles de réalisation, faite en regard des dessins annexés sur lesquels :
la figure 1 représente une vue schématique en coupe d'un dispositif selon l'invention adaptable sur machine ;
la figure 2 représente une vue schématique partielle, en coupe,à plus grande échelle, du dispositif de la figure 1 adapté sur machine ;
les figures 3A et 3B représentent des vues en coupe d'une première forme de réalisation d'un organe de distribution selon l'invention, respectivement en position d'armement et d'évacuation pour des pièces de longueur différentes ;
les figures 4A et 4B représentent des vues en coupe de l'organe selon les figures 3A, 3B, illustrant le fonctionnement pour des pièces de même longueur ;
la figure 5 représente une vue schématique en coupe d'une seconde forme de réalisation d'un organe de distribution selon l'invention, avec une vue partielle agrandie selon la figure 6.

Sur ces dessins, les mêmes références désignent les mêmes éléments.

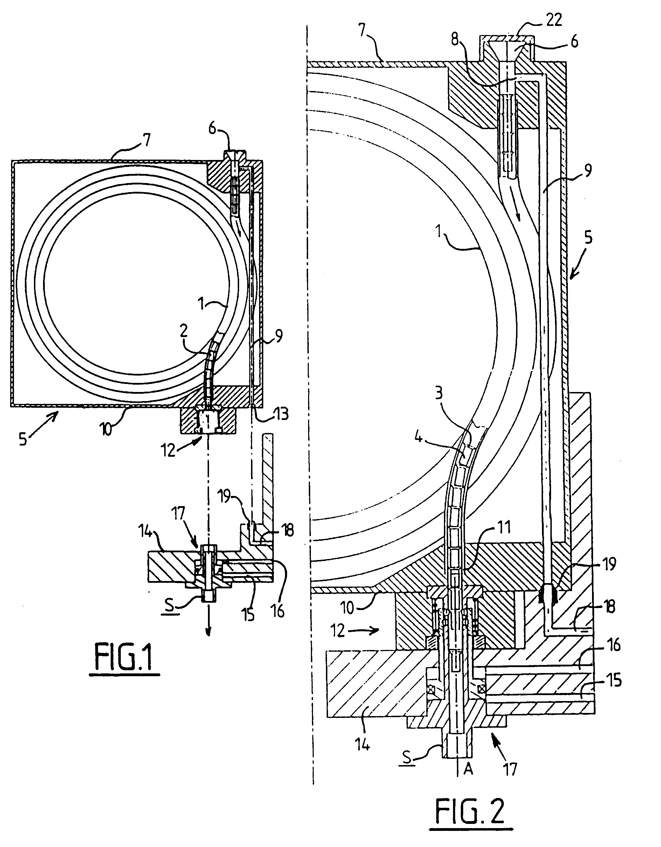

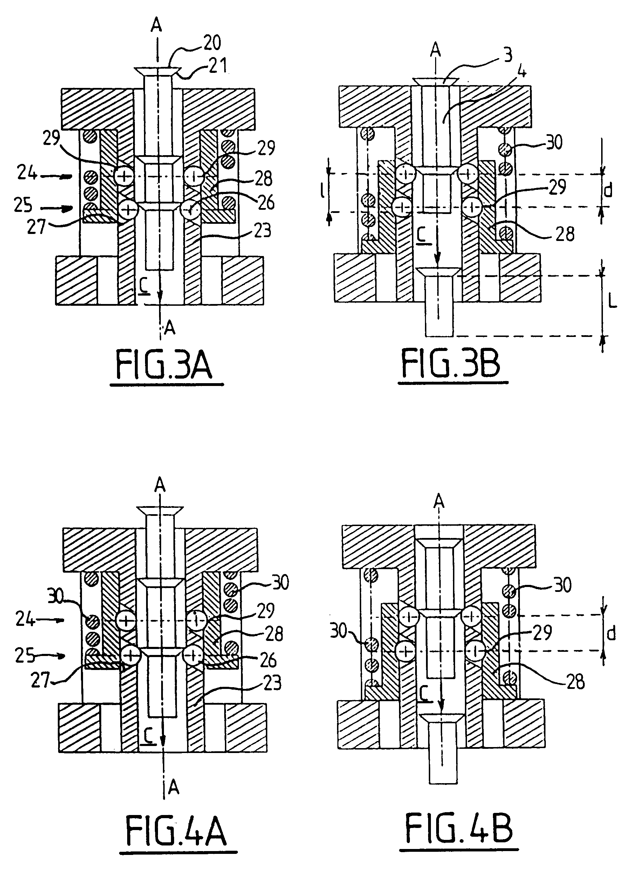

En se référant aux figures 1 et 2, le tube 1 contenant les pièces cylindriques à distribuer, telles que des rivets 2 constitués d'une tête 3 (fig. 3) et d'un fût 4, est enroulé selon une forme torique à spires multiples'à l'intérieur d'un conteneur rigide de référence générale 5, de dimensions extérieures suffisamment réduites pour assurer un caractère portatif audit conteneur. L'extrémité amont du tube 1 est reliée intérieurement à une ouverture 6 d'alimentation en rivets débouchant hors du conteneur sur une face latérale 7, ainsi qu'à une entrée d'air comprimé 8 reliée à un conduit intérieur 9 débouchant sur la face opposée 10 du conteneur. L'extrémité aval 11 du tube 1 aboutit sur l'organe de distribution coup par coup 12 dit ci-après distributeur ou sélecteur, et qui, dans la forme de réalisation représentée sur les figures 1 et 2, est solidaire de la face 10 du conteneur et sera d'ailleurs décrit en détail ci-après. La face 10 du conteneur 5 comprend encore une entrée 13 d'air comprimé pour l'alimentation du conduit intérieur 9. Comme mentionné plus haut, le conteneur est directement adaptable sur une machine d'assemblage, par sa face latérale 10 comprenant l'organe de distribution, de référence générale 12, et l'entrée d'air comprimé 13, sur un socle 14 de forme complémentaire solidaire de ladite machine (non représentée) et muni des conduits d'air compriné 15, 16 de l'ensemble de commande 17 du distributeur 12, et 18 avec un ajutage convenable 19 de connexion sur l'entrée 13, ainsi que d'un conduit S de passage de pièces.

Le tube 1 peut être flexible et il est choisi de telle sorte que son diamètre intérieur soit dans un rapport prédéterminé avec le plus grand diamètre de la pièce à alimenter, le plus grand diamètre étant par exemple celui de la tête 3 de la vis ou du rivet considéré mais, plus généralement, la plus grande dimension diamétrale d'une pièce cylindrique ou présentant un axe de symétrie.

Le rapport prédéterminé entre le diamètre intérieur du tube 1 et le plus grand diamètre de la pièce considérée est tel que le flux d'air comprimé admis à l'extrémité 6 du tube puisse s'écouler entre la paroi intérieure dudit tube et la tête 3 de la pièce, de sorte que la restriction de débit qui en résulte provoque une légère différence de pression entre la face amont 20 (figures 3A,B - 4A,B) et la face aval 21 de la tête de chaque pièce, créant ainsi sur chacune d'entre elles une poussée axiale propre à faire avancer toutes les pièces dans le tube 1. Le flux d'air circulant tout le long du tube jusqu'à son extrémité de sortie 11, le dernier rivet pourra ainsi être expulsé vers le point d'utilisation sur machine, libérant un espace qui se trouve immédiatement occupé par la pièce suivante, et ainsi de suite de proche en proche jusqu'à la dernière pièce vers l'extrémité amont 6 du tube 1.

Après de nombreux essais, la Demanderesse a trouvé que pour pouvoir assurer l'acheminement régulier de grandes quantités de pièces emmagasinées dans un tube, le diamètre intérieur dudit tube doit se situer dans le rapport de 1,10 à 1,40 fois la plus grande dimension diamétrale de la pièce à acheminer.

L'entrée 6 du tube 1 est raccordée à un orifice débouchant sur la face 7 du conteneur, permettant le chargement des pièces dans le tube par tout moyen approprié, manuel ou automatique tel qu'un bol vibrant bien connu pour la grande cadence de chargement qu'il permet d'obtenir. Cette extrémité du tube ou entrée 6 est obturable au moyen d'un bouchon amovible 22 qui a la double fonction d'éviter la perte de pièces pendant le transport et les manutentions du conteneur 5 et d'assurer l'étanchéité pneumatique de l'orifice 6 lorsque le tube 1 est alimenté en air comprimé par le conduit 9.

L'extrémité de sortie 11 du tube débouche sur la face 10 du conteneur qui, dans une réalisation particulière, peut éventuellement être la même face que celle dans laquelle est ménagé l'orifice d'entrée 6 ou toute autre face selon que le nécessité l'interface mécanique du conteneur et de la machine.

L'orifice de la sortie 11 débouche lui-même dans un distributeur coup par coup 12 présentant avantageusement la particularité de ne pas modifier la direction d'acheminement des pièces selon leur axe principal A de symétrie, contrairement aux mécanismes connus qui consistent à déplacer les pièces une à une dans une direction approximativement perpendiculaire à leur axe principal de symétrie.

En se référant aux figures 3A à 4B, et selon une première forme de réalisation, le distributeur comprend une douille 23 formant conduit intérieur C dans laquelle sont formées deux rangées 24, 25 de billes 26,chacune disposée dans un orifice conique 27 tel que le plus petit diamètre du cône est inférieur au diamètre de la bille. Un fourreau 28 extérieur à la douille 23 coulisse sur celle-ci. Un dégagement circulaire 29 est ménagé dams la paroi intérieure de ce fourreau, pour permettre le débattement des billes 26 en position d'ouverture maximum. Le fourreau 28 peut se déplacer axialement entre deux positions extrêmes telles que le dégagement 29 se place alternativement au droit de l'une et de l'autre rangée de billes 24, 25. Ainsi, comme représenté sur les figures 3A, 4A, lorsque la rainure de dégagement est au droit de la rangée 24 de billes supérieures, celles-ci disposent du dégagement nécessaire pour se déplacer de l'intérieur vers l'extérieur, ce déplacement s'effectuant sous la poussée axiale des pièces résultant du flux d'air comprimé dans le tube 1. Dans le même temps, les billes de la rangée inférieure 25 sont contraintes de se placer en position d'ouverture minimum par la paroi intérieure du fourreau 28, venant ainsi arrêter la tête 3 de la première pièce en position dans le tube.

Lorsque le fourreau 28 se déplace dans la seconde position extrême, le dégagement 29 se trouve au droit de la rangée de billes inférieures 25, celle-ci disposant alors du débattement radial nécessaire pour s'éclipser sous la poussée des pièces dans le tube 1, libérant ainsi la première pièce qui est alors expulsée au travers de l'orifice de sortie, et entraînée par le flux d'air comprimé vers la machine. Dans le même temps, les billes de la rangée supérieure 24 sont contraintes de se déplacer radialement vers leur position d'ouverture minimum, arrêtant la tête de la deuxième pièce en position dans le tube d'acheminement.

Il apparaît clairement que le mouvement de va-et-vient du fourreau 28 provoque le déplacement alternatif des rangées de billes dans deux directions opposées de telle sorte que lorsque les billes de la rangée supérieure sont en position d'ouverture maximum, les billes de la rangée inférieure sont en position d'ouverture minimum et vice versa. A chaque aller et retour du fourreau correspond l'expulsion de la première pièce en tête de colonne du tube 1 vers la machine d'assemblage et l'avancement d'un pas de la colonne de pièces.

Dans cette forme de réalisation, le fourreau 28 peut être mu axialement sous la poussée d'une pièce commandée par un vérin pneumatique (non représenté) et rappelé par un ressort 30 en position de repos. Le vérin peut être logé dans le socle récepteur 14 du conteneur, solidaire de la machine, et le sélecteur 12 incorporé au conteneur, de telle sorte que lorsque le conteneur est désolidarisé du socle, la rangée de billes en position d'ouverture minimale joue le rôle d'obturateur automatique de l'orifice de sortie pour éviter la perte de pièces lors du transport et de la manutention du conteneur.

Le diamètre des billes 26 et leur amplitude de déplacement radial sont prédéterminés de telle sorte que leur position d'ouverture maximum corresponde à la plus grande dimension diamétrale de la pièce, augmentée du jeu mécanique juste nécessaire pour laisser passer librement la pièce à l'intérieur de l'ensemble de billes, et que leur position d'ouverture minimum, ou de fermeture, corresponde à un diamètre judicieusement choisi, compris entre la plus grande dimension diamétrale des pièces et une dimension diamétrale réduite, conmme par exemple le corps ou le fût 4 de la vis ou du rivet. En se référant plus particulièrement à la figure 3B, la distance d entre les deux rangées de billes 24, 25 est également prédéterminée et égale à la plus petite dimension longitudinale l des pièces à acheminer, de sorte que pour obtenir une sélection coup par coup, une pièce et une seule puisse se trouver à tout instant présente dans la zone comprise entre les deux rangées de billes. Cet organe de distribution présente l'avantage de pouvoir fonctionner sans aucune modification ou réglage pour toute pièce de plus grande dimension diamétrale donnée, quelle que soit sa longueur L pourvu qu'elle soit au plus égale à la distance nominale d entre les deux rangées de billes 24, 25.

Il découle donc du distributeur coup par coup selon l'invention, l'avantage de pouvoir constituer dans le tube 1 des empilages prédéterminés de pièces 2 de même diamètre nominal et de longueurs différentes, selon un ordre de succession calqué sur la programmation de la machine d'assemblage automatique.

Comme mentionné plus haut, lorsque le distributeur 12 coup par coup fait partie intégrante du conteneur 5, il assure la fonction d'obturation automatique de l'orifice de sortie des pièces pour éviter la perte de celles-ci lors des opérations de transport et de manutention du conteneur.

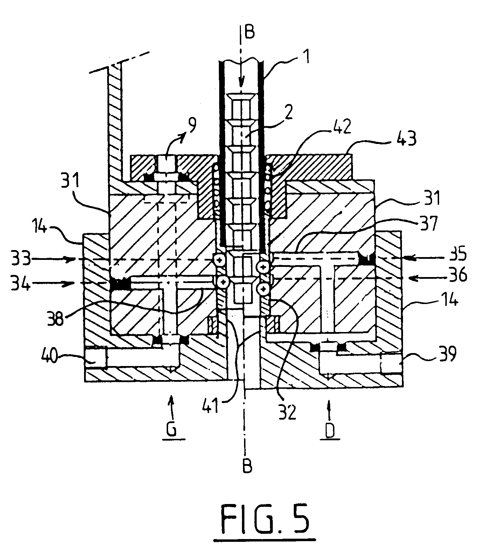

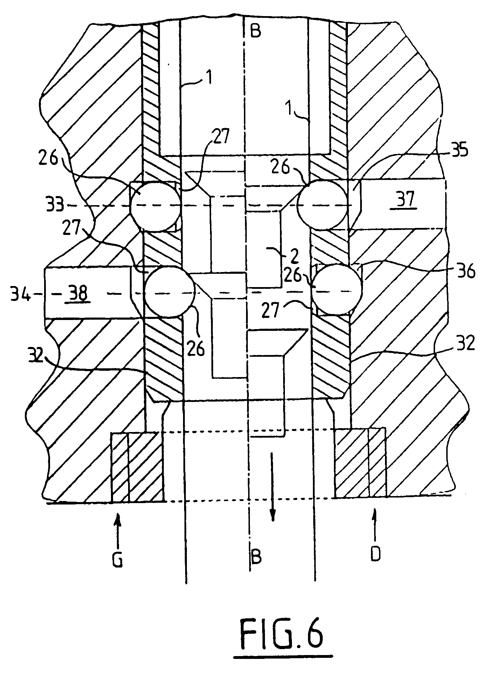

Une seconde forme de réalisation d'un distributeur coup par coup est illustrée sur les figures 5 et 6 des dessins annexés. Sur ces figures,on a représenté sur la partie G par rapport à l'axe B-B le distributeur en position de fonctionnement, inséré sur le socle 14 de la machine, et sur la partie D par rapport à l'axe B-B, le distributeur en position de repos, en cours de désolidarisation du socle 14. Le distributeur comprend un corps 31 dans lequel est insérée à glissement une chemise 32 mobile en translation selon l'axe B-B. Cette chemise comporte deux rangées 33, 34 de billes 26, chacune disposée dans un orifice conique 27 (fig. 6) et déplaçables radialement devant des gorges annulaires 35, 36 situées sur la face interne du corps 31. Des conduits d'air comprimé 37, 38 débouchent respectivement dans les gorges annulaires 35, 36 et correspondent à des entrées d'alimentation 39, 40 comprises dans le socle 14. La partie inférieure de la chemise 32, opposée au tube d'acheminement 1, peut prendre appui sur une butée 41 du socle 14 vers laquelle elle est sollicitée par un ressort de rappel 42 prenant lui-même appui sur une bride fixe convenable 43 fixée sur le corps 31. Etant entendu que le bouchon d'obturation 22 de l'orifice d'entrée 6 du conteneur 5 est fermé et étanche à l'air, le distributeur fonctionne de la même manière que celle décrite selon la forme de réalisation précédente, par le jeu du déplacement radial des billes par rapport aux gorges annulaires, sous l'effet d'une commande radiale alternée des billes lorsque la chemise 32 prend appui sur la butée 41 à l'encontre du ressort de rappel 42. En fonctionnement (partie G de la figure), la commande des deux rangées de billes est donc assurée par l'alimentation alternée en air comprimé des conduits 37, 38. En position de repos du distributeur, ou de désolidarisation par rapport au socle 14 (partie D de la figure), la chemise 32 est rappelée par le ressort 42 vers sa position opposée au tube 1, ce qui amène les billes à quitter les gorges annulaires respectives 35, 36 et leur fait prendre la position d'obturation du passage de sortie.

La disposition selon laquelle le conteneur présente un orifice de sortie de pièces et un ajutage d'alimentation en air comprimé qui se mettent en position par simple contact sur leurs homologues prévus dans la platine ou le socle solidaire de la machine, apporte une facilité unique de mise en place ou de dépose rapide du conteneur qui sera alors tenu en position au moyen d'un dispositif de verrouillage rapide comme on en connaît de divers types en mécanique. On conçoit aisément tous les avantages qu'apporte un tel agencement pour un changement extrêmement rapide de type de pièce. De plus, le sélecteur coup par coup étant intégré au conteneur comme décrit plus haut dans un des modes particuliers de réalisation, il suffit alors de disposer de conteneurs affectés à chaque type de pièce pour pouvoir en quelques secondes procéder à un changement de fabrication.

Le fait de disposer de conteneurs affectés à chaque type de pièce présente en outre l'avantage d'apporter un supplément de sécurité et de qualité tendant vers l'objectif du"zéro défaut", car dans la mesure où les pièces auront été soigneusement contrôlées avant magasinage en conteneur, il n'y a plus de risques de mélange de pièces, de présence de corps étrangers ou autre source d'incident susceptible d'interrompre le cycle automatique de la machine. Il faut ajouter à cela l'économie apportée par l'ensemble d'obturation automatique décrit plus haut et qui évite les pertes de pièces lors des changements sur machine. Enfin, on peut imaginer aisément que, grâce à leur faible encombrement, plusieurs conteneurs soient disposés à demeure sur la machine, permettant ainsi des changements de types de pièces dans le cycle automatique, sans arrêt machine.

## Revendications

1. Procédé de conditionnement et de distribution de petites pièces cylindriques (2), telles que vis ou rivets, dont le plus grand diamètre de la tête (3) est identique et dont la longueur du fût (4) peut être différente, dans lequel on dispose lesdites pièces dans le même sens, fût devant, en une colonne dans un tube d'alimentation cylindrique (1) muni en amont d'une ouverture (6) d'alimentation en pièces et d'une entrée (8) d'air comprimé et muni en aval d'une sortie (11) de distribution desdites pièces associée à un organe (12) de distribution coup par coup à douille, fourreau, ressort et billes, procédé du type dans lequel on forme une restriction de débit d'air entre la paroi du tube (1) et chaque tête (3), afin de provoquer une légère différence de pression entre la face amont (20) et la face aval (21) de la tête de chaque pièce, permettant d'engendrer une poussée axiale sur chacune d'entre elles et d'introduire la pièce de la sortie aval dans l'organe (12) de distribution, caractérisé par le fait que l'on forme la restriction de débit d'air en fixant le diamètre de la paroi intérieure du tube (1) entre 1,10 et 1,40 fois le plus grand diamètre de la tête (3) des pièces cylindriques (2).

2. Dispositif pour la mise en oeuvre du procédé selon la revendication 1 de conditionnement et de distribution de petites pièces cylindriques (2), telles que vis ou rivets, dont le plus grand diamètre de la tête (3) est identique et dont la longueur du fût (4) peut être différente, lesdites pièces étant disposées dans le même sens, fût devant, en une colonne, le dispositif comprenant un tube cylindrique (1) constituant la colonne de pièces cylindriques (2), muni d'une ouverture d'alimentation (6), d'une entrée d'air comprimé (8) et d'une sortie (11) des pièces, le tube (1) étant disposé en spirale à l'intérieur d'un conteneur (5) et sa sortie (11) étant reliée à un organe (12) de distribution coup par coup des pièces, du type à douille, fourreau, ressort et billes, dispositif caractérisé par le fait que le conteneur (5) est rigide, le distributeur (12) étant fixé sur le conteneur et présentant le même diamètre et le même axe de fonctionnement (A) que ce dernier, l'ensemble monobloc du conteneur (5) et du distributeur (12) coopérant avec un socle (14) de forme complémentaire solidaire de la machine d'assemblage et comportant un conduit (S) de passage de pièces (2) coaxial avec le conduit (C) du distributeur (12) d'alimentation d'un dispositif de préhension unitaire de la machine, un unique conduit (9) d'alimentation en air comprimé étant entièrement logé dans le conteneur (5), alimenté directement à partir du socle (14) à travers un ajutage de connexion (19) et débouchant à l'extrémité amont du tube (1), qui est obturée par un bouchon amovible (22), de telle sorte que l'ensemble conteneur-distributeur associé à chaque type de pièces (2) est directement connectable ou déconnectable du socle de la machine en une seule et unique manipulation.

3. Dispositif selon la revendication 2, caractérisé par le fait qu'un ensemble (17) de commande du distributeur est logé dans le socle (14) et comporte des conduits (15, 16) d'air comprimé associés au fourreau mobile (28) du distributeur, ledit fourreau pouvant être déplacé par l'air comprimé à l'encontre d'un ressort de rappel (30) de manière à commander le mouvement de deux rangées de billes périphériques (29) destinées à maintenir ou libérer la pièce aval (2) qui se présente fût devant, sans nécessiter aucun retournement du fourreau mobile (28) ou de ladite pièce aval (2) en vue de son utilisation par la machine.

## Claims

1. A method for conditioning and distributing small cylindrical parts (2), such as screws or rivets, the largest diameter of the head (3) of which is identical and the length of the shank (4) of which may differ, in which said parts are arranged in the same direction, shank-first, in a column in a cylindrical feed tube (1) provided upstream with a feed opening (6) for the parts and a compressed-air inlet (8) and provided downstream with a distribution outlet (11) for said parts, associated with a member (12) for distribution successively with a sleeve, bush, spring and balls, said process being of the type in which a restriction in the air flow is formed between the wall of the tube (1) and each head (3) in order to cause a slight difference in pressure between the upstream face (20) and the downstream face (21) of the head of each part, making it possible to produce an axial thrust on each of them and to introduce the part from the downstream outlet into the distribution member, characterized by the fact that the restriction in the air flow is formed by setting the diameter of the internal wall of the tube (1) to between 1.10 and 1.40 times the largest diameter of the head (3) of the cylindrical parts (2).

2. A device for implementing the process according to Claim 1 for conditioning and distributing small cylindrical parts (2), such as screws or rivets, the largest diameter of the head (3) of which is identical and the length of the shank (4) of which may differ, said parts being arranged in the same direction, shank-first, in a column, said device comprising a cylindrical tube (1) forming the column of cylindrical parts, provided with a feed opening (6), a compressed-air inlet (8) and a outlet (11) for the parts, the tube (1) being arranged in a spiral within a container (5) and its outlet (11) being connected to a member (12) for distribution of the parts successively, of the type with a bush, sleeve, spring and balls, which device is characterized by the fact that the container (5) is rigid, the distributor (12) being fixed to the container and having the same diameter and the same operating axis (A) as the latter, the single-piece assembly consisting of the container (5) and the distributor (12) cooperating with a base (14) of complementary shape integral with the assembly machine and comprising a channel (S) for the passage of parts (2) which is coaxial with the channel (C) of the distributor (12) for feeding a unitary gripping device of the machine, a single compressed-air feed channel (9) being housed completely within the container (5), fed directly from the base (14) via a connecting nozzle (19) and opening on to the upstream end of the tube (1), which is blocked by a removable plug (22), such that the container-distributor assembly associated with each type of part (2) is directly connectable to or disconnectable from the base of the machine in one single operation.

3. A device according to Claim 2, characterized by the fact that a control unit (17) for the distributor is housed in the base (14) and comprises compressed-air channels (15, 16) associated with the mobile sleeve (28) of the distributor, said sleeve being able to be displaced by compressed air against a return spring (30) so as to control the movement of two rows of peripheral balls (29) intended to hold or free the downstream part (2) which is presented shank-first, without requiring any reversal of the mobile sleeve (28) or of said downstream part (2) for the use thereof by the machine.

## Patentansprüche

1. Verfahren zur Konditionierung und Abgabe von zylindrischen Kleinteilen (2) wie Schrauben oder Nieten, bei denen der größte Durchmesser des Kopfes (3) identisch ist und die Länge des Schafts (4) unterschiedlich sein kann, wobei die Teile in der gleichen Richtung mit dem Schaft nach vorne in einer Säule in einem zylindrischen Versorgungsrohr (1) angeordnet werden, das oberhalb mit einer Öffnung (6) zur Versorgung mit Teilen und mit einem Luftdruckeingang (8) und unterhalb mit einem Ausgang (11) zur Abgabe der Teile versehen ist, der einem Organ (12) zur stückweisen Abgabe (Schlag auf Schlag) mit Hülse, Scheide, Feder und Kugeln zugeordnet ist, wobei bei diesem Verfahrenstyp eine Luftdurchsatzbegrenzung zwischen der Wand des Rohrs (1) und jedem Kopf (3) vorgesehen ist, um eine leichte Druckdifferenz zwischen der oberen Seite (20) und der unteren Seite (21) des Kopfes jedes Teils hervorzurufen, womit es möglich wird, auf jedes eine axiale Schubkraft zu erzeugen und das Teil am unteren Ausgang in das Abgabeorgan (12) einzuführen, dadurch gekennzeichnet, daß die Luftdurchsatzbegrenzung gebildet wird, indem der Durchmesser der Innenwand des Rohrs (1) auf das 1,10- bis 1,40-fache des größten Durchmessers des Kopfs (3) der zylindrischen Teile festgelegt wird.

2. Vorrichtung zur Durchführung des Verfahrens nach Anspruch 1 zur Konditionierung und Abgabe von zylindrischen Kleinteilen (2) wie Schrauben oder Nieten, bei denen der größte Durchmesser des Kopfes (3) identisch ist und die Länge des Schafts (4) unterschiedlich sein kann, wobei die Teile in der gleichen Richtung mit dem Schaft nach vorne in einer Säule angeordnet werden, wobei die Vorrichtung ein zylindrisches Rohr (1) aufweist, das die Säule für die zylindrischen Teile (2) bildet, mit einer Versorgungsöffnung (6), einem Drucklufteingang (8) und einem Ausgang (11) für die Teile versehen ist, wobei das Rohr (1) spiralförmig im Inneren eines Behälters (5) angeordnet und sein Ausgang (11) mit einem Organ (12) zur stückweisen Abgabe der Teile mit Hülse, Scheide, Feder und Kugeln verbunden ist, wobei die Vorrichtung dadurch gekennzeichnet ist, daß der Behälter (5) starr ist, wobei das Abgabeorgan (12) an dem Behälter befestigt ist und den gleichen Durchmesser und die gleiche Betriebsachse (A) wie dieser aufweist, wobei die Einblockeinheit des Behälters (5) und des Abgabeorgans (12) mit einem Sockel (14) von komplementärer Form zusammenwirkt, der mit einer Maschine zum Zusammenfügen fest verbunden ist und eine Leitung (S) zum Durchgang von Teilen (2) aufweist, die koaxial zu der Leitung (C) des Abgabeorgans (12) zur Versorgung einer Greifeinrichtung liegt, die mit der Maschine eine Einheit bildet, wobei eine einzige Leitung (9) zur Versorgung mit Druckluft vollständig in dem Behälter (5) untergebracht ist, direkt ausgehend von dem Sockel (14) durch einen Anschlußstutzen (19) versorgt wird und im oberen Ende des Rohrs (1) mündet, das durch einen abnehmbaren Stopfen (22) verschlossen ist, so daß die jedem Typ von Teilen (2) zugeordnete Einheit aus Behälter und Abgabeorgan in lediglich einer einzigen Handhabung direkt mit dem Sockel der Maschine verbunden oder davon getrennt werden kann.

3. Vorrichtung nach Anspruch 2, dadurch gekennzeichnet, daß eine Einheit (17) zum Steuern des Abgabeorgans in dem Sockel (14) aufgenommen ist und zwei Druckluftleitungen (15, 16) aufweist, die der beweglichen Scheide (28) des Abgabeorgans zugeordnet sind, wobei die Scheide gegenüber einer Rückstellfeder (30) derart durch Druckluft verschoben werden kann, daß die Bewegung der beiden Reihen von Umfangskugeln (29) gesteuert wird, die dazu bestimmt sind, das stromabwärts liegende Teil (2), das mit dem Schaft nach vorne auftaucht, zu halten oder freizugeben, ohne daß die bewegliche Scheide (28) oder das stromabwärts liegende Teil (2) zur Verwendung durch die Maschine umgedreht werden müßte.
